# EUROPEAN PATENT APPLICATION

(11) **EP 2 704 362 A2**
(43) Date of publication of application: **05.03.2014**
(21) Application number: 11795074.1
(22) Date of filing: 30.05.2011
(51) Int. Cl.: H04L 12/26

(54) **METHOD, APPARATUS AND SYSTEM FOR ANALYZING NETWORK TRANSMISSION CHARACTERISTICS**

(71) Applicant: Huawei Technologies Co., Ltd., Shenzhen, Guangdong 518129 (CN)
(72) Inventor: SHEN, Linfei, Guangdong 518129 (CN); YU, Qinghua, Guangdong 518129 (CN); GUO, Weilei, Guangdong 518129 (CN); PANG, Weidong, Guangdong 518129 (CN); ZHOU, Liang, Guangdong 518129 (CN); WEI, Jianwei, Guangdong 518129 (CN); XU, Hongkui, Guangdong 518129 (CN)
(74) Representative: Goddar, Heinz J.
(86) International application number: PCT/CN2011/074862
(87) International publication number: WO 2011/157108

(57) **Abstract**

A method for analyzing a network transmission characteristic is provided and includes: receiving, by an intermediate network element, a service packet sent by a first service network element through the intermediate network element to a second service network element, where the service packet carries a service stream identifier, service stream information, and a control rule, where the service stream identifier is used to identify a service stream, the service stream information is used to provide a parameter that is required during transmission characteristic analysis, and the control rule is used to determine a type of the transmission characteristic analysis; and determining, by the intermediate network element, the type of the transmission characteristic analysis according to the received control rule, and performing, according to the service stream information, the transmission characteristic analysis on the service stream identified by the service stream identifier in a network. Through embodiments of the present invention, more real and accurate network transmission characteristic analysis data can be obtained, thereby improving the accuracy of network fault location.

## Description

### TECHNICAL FIELD

The present invention relates to technologies for analyzing a network transmission characteristic, and in particular, to a method, an apparatus, and a system for analyzing a network transmission characteristic.

### BACKGROUND

A network system includes some service network elements and some intermediate network elements, where the service network elements herein may specifically be network elements that perform service processing on data, such as a media universal gateway (UMG), a softswitch device, and a radio network controller (RNC); and the intermediate network elements may specifically be network elements that perform data transfer and forwarding, such as a router and an exchange.

To maintain a network, a transmission characteristic of the network needs to be analyzed frequently, for example, what a network delay is, what a packet loss rate is, whether there is a connectivity fault, and whether a packet is rewritten.

When the transmission characteristic of the network is analyzed in the prior art, the following method is mainly used: in one end (a service network element) of the network, sending some test data (such as some IP packets) through a dedicated test instrument to a peer end (a service network element at another end), and receiving these test data by the peer end to analyze the transmission characteristic of the network, for example, obtaining the transmission delay according to the time of sending and receiving the data, and obtaining the packet loss rate according to the number of sent and received packets.

During a process of implementing the present invention, the inventor finds that the prior art has at least the following problem.

When the method in the prior art is used to analyze the network transmission characteristic, a data stream used for test cannot completely represent real service stream information, thereby affecting the accuracy of network transmission characteristic analysis.

### SUMMARY

Embodiments of the present invention provide a method, an apparatus, and a system for analyzing a network transmission characteristic, so as to solve an existing technical problem in the prior art that network transmission characteristic analysis is inaccurate.

The embodiments of the present invention adopt the following technical solutions:
An embodiment of the present invention provides a method for analyzing a network transmission characteristic, which includes:
   receiving, by an intermediate network element, a service packet sent by a first service network element through the intermediate network element to a second service network element, where the service packet carries a service stream identifier, service stream information and a control rule, where the service stream identifier is used to identify a service stream, the service stream information is used to provide a parameter that is required during transmission characteristic analysis, and the control rule is used to determine a type of the transmission characteristic analysis; and
   determining, by the intermediate network element, the type of the transmission characteristic analysis according to the received control rule, and analyzing, according to the parameter that is provided by the service stream information and required during the transmission characteristic analysis, the service stream identified by the service stream identifier in a network.

An embodiment of the present invention further provides an apparatus for analyzing a network transmission characteristic, which includes:
a receiving unit, configured to receive a service packet sent by a first service network element through the intermediate network element to a second service network element, where the service packet carries a service stream identifier, service stream information and a control rule, where the service stream identifier is used to identify a service stream, the service stream information is used to provide a parameter that is required during transmission characteristic analysis, and the control rule is used to determine a type of the transmission characteristic analysis; and
a detecting unit, configured to determine the type of the transmission characteristic analysis according to the received control rule, and analyze, according to the parameter that is provided by the service stream information and required during the transmission characteristic analysis, the service stream identified by the service stream identifier in a network.

An embodiment of the present invention further provides a system for analyzing a network transmission characteristic, which includes:
a first service network element, configured to send a service packet to a second service network element through an intermediate network element;
the intermediate network element, configured to receive the service packet sent by the first service network element through the intermediate network element to the second service network element, where the service packet carries a service stream identifier, service stream information, and a control rule, where the service stream identifier is used to identify a service stream, the service stream information is used to provide a parameter that is required during transmission characteristic analysis, and the control rule is used to determine a type of the transmission characteristic analysis; and the intermediate network element determines the type of the transmission characteristic analysis according to the received control rule, and analyzes, according to the parameter that is provided by the service stream information and required during the transmission characteristic analysis, the service stream identified by the service stream identifier in a network; and
the second service network element, configured to receive, through the intermediate network element, the service packet sent by the first service network element.

In the embodiments of the present invention, because information required during analysis is carried in a service packet, analysis may be performed based on an existing real service stream, thereby improving the accuracy of the analysis greatly; and secondly, in the embodiments of the present invention, an intermediate network element performs transmission characteristic analysis; therefore a certain specific intermediate network element can be directly located for analysis, thereby improving the precision of the analysis.

### BRIEF DESCRIPTION OF THE DRAWINGS

FIG. 1 is a schematic structural diagram of a network according to an embodiment of the present invention;
FIG. 2 is a schematic flow chart of a method for analyzing a network transmission characteristic according to an embodiment of the present invention;
FIG. 3 is a schematic flow chart of another method for analyzing a network transmission characteristic according to an embodiment of the present invention;
FIG. 4 is a schematic structural diagram of an apparatus for analyzing a network transmission characteristic according to an embodiment of the present invention; and
FIG. 5 is a schematic structural diagram of a system for analyzing a network transmission characteristic according to an embodiment of the present invention.

### DETAILED DESCRIPTION OF EMBODIMENTS

Implementation of a method and an apparatus for analyzing a network transmission characteristic according to embodiments of the present invention is illustrated in detail in the following with reference to the accompanying drawings.

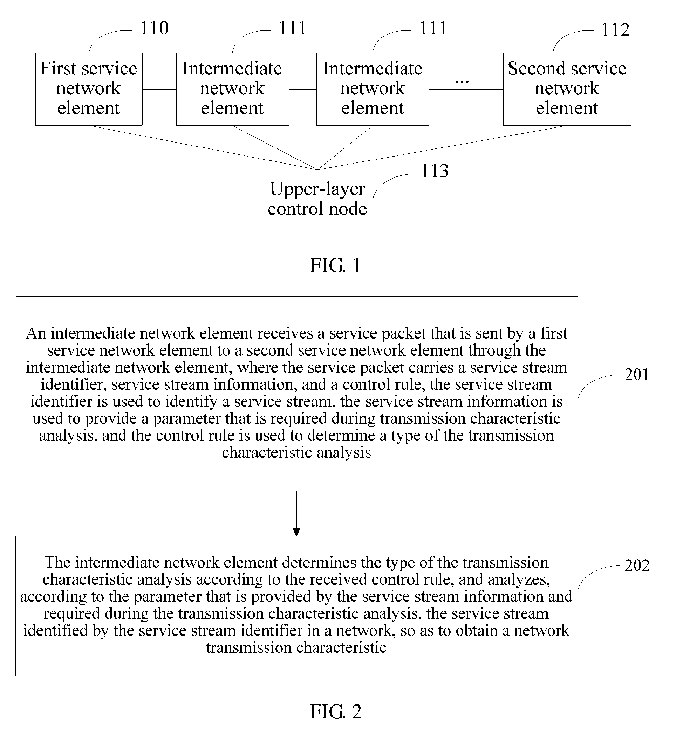

A method for analyzing a network transmission characteristic according to an embodiment of the present invention is applicable in a network structure as shown in FIG. 1, and specifically, as shown in FIG. 1, the network includes:
a first service network element 110, several intermediate network elements 111, and a second service network element 112, where the first service network element 110 performs data communication with the second service network element 112 through the several intermediate network elements 111; and the first service network element 110, the several intermediate network elements 111, and the second service network element 112 each are connected to an upper-layer control node 113.
In the following, generally, the first service network element 110 is used as a sending end of a service packet and the second service network element 112 is used as a receiving end of the service packet.

FIG. 2 is a schematic flow chart of a method for analyzing a network transmission characteristic according to an embodiment of the present invention. The method is applicable in a first service network element in network transmission characteristic analysis, and as shown in FIG. 2, the method includes:
Step 201: An intermediate network element receives a service packet that is sent by a first service network element to a second service network element through the intermediate network element, where the service packet carries a service stream identifier, service stream information, and a control rule, the service stream identifier is used to identify a service stream, the service stream information is used to provide a parameter that is required during transmission characteristic analysis, and the control rule is used to determine a type of the transmission characteristic analysis.

Specifically, in different communication protocols, structures of the service packet are different; however, when the service stream identifier, the service stream information, and the control rule are carried, a content of the information may be encapsulated in a Data field of a service packet in the foregoing protocols. The protocols include but are not limited to: the Internet Control Message Protocol (ICMP), the User Datagram Protocol (UDP), the Transmission Control Protocol (TCP), the Internet Protocol (IP), and so on.

Step 202: The intermediate network element determines the type of the transmission characteristic analysis according to the received control rule, and analyzes, according to the parameter that is provided by the service stream information and required during the transmission characteristic analysis, the service stream identified by the service stream identifier in a network, so as to obtain a network transmission characteristic.

After receiving the analysis type and the required parameter, the intermediate network element can analyze the service stream identified by the service stream identifier, for example, if the analysis type is "packet loss rate", and the parameter is "the number of sent service packets", the intermediate network element may count the number of received packets and the number of sent packets to determine the packet loss rate. Because the network transmission characteristic is reflected through a transmission characteristic of one or more service streams, the network transmission characteristic analysis (for example, network transmission characteristics such as a packet loss rate, a link delay, and whether a fault exists, can be analyzed) can be implemented by analyzing a service transmission characteristic.

In the method shown in FIG. 2, in the embodiment of the present invention, information required in analysis is carried in the service packet; because attributes such as different packet protocol types, encapsulation formats, packet sizes and QoS priorities can directly affect the performance (such as efficiency and rate) of transferring the service packet of the network, the information required in analysis and carried in the service packet (which is not a test packet in the prior art) can be analyzed based on an existing real service stream, thereby improving the accuracy of the analysis greatly. Secondly, in the embodiment of the present invention, an intermediate network element performs transmission characteristic analysis; and therefore, a certain specific intermediate network element can be directly located for analysis (these network elements are not viewed in the whole as a black box for analysis, only a characteristic of the black box is known, but a characteristic of which specific intermediate network element is not known), thereby more specifically locating a network transmission path that is relevant to the intermediate network element and improving the precision of the analysis. Moreover, in the embodiment of the present invention, the architecture of the network is not changed, and an additional device is not required, and the embodiments of the present invention can be performed based on an existing device, so that the implementation is easy and the cost is saved.

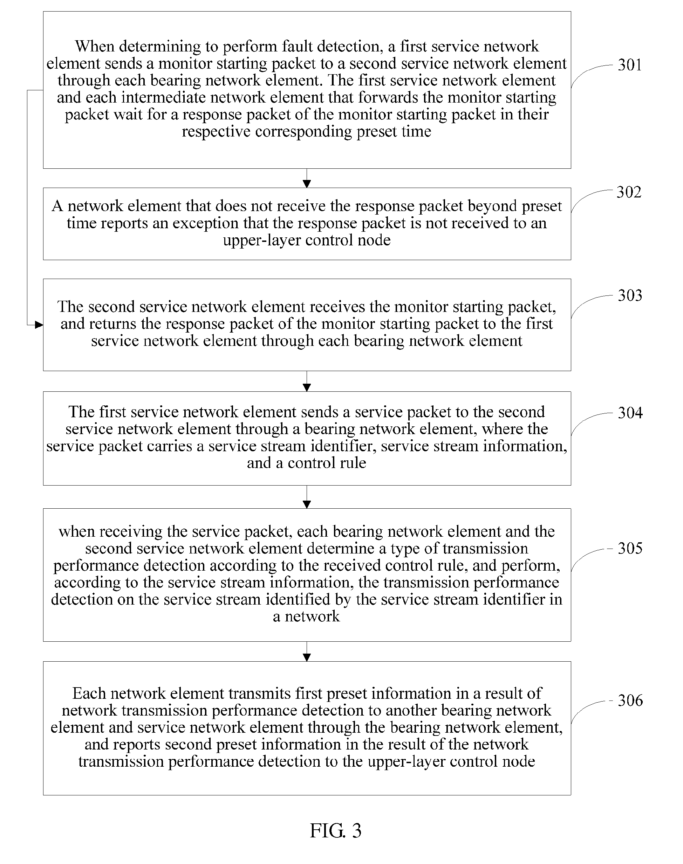

Based on FIG. 2, a method for analyzing a network transmission characteristic according to an embodiment of the present invention is illustrated in further detail through FIG. 3. In the method for analyzing a network transmission characteristic shown in FIG. 3, how a first service network element, an intermediate network element and a second service network element cooperate to implement network transmission characteristic analysis is described in further detail. As shown in FIG. 3, the method includes:

Step 301: When determining to perform transmission characteristic analysis, a first service network element sends a monitor starting packet to a second service network element through each intermediate network element. The first service network element and each intermediate network element that forwards the monitor starting packet wait for a response packet of the monitor starting packet in their respective corresponding preset time.

The preset time may be specifically set according to a network scale, data transmission situation between network elements, and so on. In the case that normal network communication is ensured, a difference between time for each network element (including the first service network element and the intermediate network elements) to receive the response packet that is returned by the second service network element and time for each network element to send the monitor starting packet is smaller than preset time corresponding to the network element.

A simple example is taken as follows: For example, if the first service network element sends the monitor starting packet to the second service network element through a first intermediate network element and a second intermediate network element, preset time of the first service network element may be preset to four seconds, preset time of the first intermediate network element may be preset to three seconds, and preset time of the second intermediate network element may be preset to two seconds. After sending the monitor starting packet to a downstream network element, that is, starting a timer, the first service network element, the first intermediate network element, and the second intermediate network element monitor a response packet of the monitor starting packet, where the response packet is sent by the downstream network element.

In this case, in step 301, when the first service network element and the intermediate network elements monitor the response packet, two cases exist:
1. A network fault occurs between two network elements: for example, a short circuit exists between the first intermediate network element and the second intermediate network element, and after sending the monitor starting packet, the first service network element and the first intermediate network element fail to receive, in preset time, the response packet returned by the second service network element through the second intermediate network element, and in this case, the following step is executed:
   Step 302: A network element that does not receive the response packet beyond preset time, reports an exception that the response packet is not received to an upper-layer control node, and transmission detection ends.

For the foregoing example, the first service network element and the first intermediate network element report the exception, and in this case, the upper-layer control node can determine a network fault between the first intermediate network element and the second intermediate network element according to the reported exception.

Herein, a network element can also determine, according to the exception, that an open circuit exists between the network element and the second service network element, and return the determination result to the upper-layer control node, so that the upper-layer control node determines, according to a determination result reported by each network element, a specific location at which the open circuit exists, which is not described herein again.
2. Communication is normal in a network, and the following step is executed:
   Step 303: The second service network element receives the monitor starting packet, and returns the response packet of the monitor starting packet to the first service network element through each intermediate network element.

In this case, continue to execute a subsequent step of the transmission characteristic analysis, and proceed to step 304.

In addition, in a practical application, it may be set that if the response packet is not received in preset time, the monitor starting packet is re-sent, and the maximum number of re-sending times is set, and so on.

Step 304: The first service network element sends a service packet to the second service network element through an intermediate network element, where the service packet carries a service stream identifier, service stream information, and a control rule, where
the service stream identifier is used to identify a service stream;
the service stream information is used to provide a parameter that is required during the transmission characteristic analysis; and
the control rule is used to determine a type of the transmission characteristic analysis.

Step 305: When receiving the service packet, each intermediate network element and the second service network element determine the type of the transmission characteristic analysis according to the received control rule, and analyze, according to the service stream information, the service stream identified by the service stream identifier in the network.

For different service stream information and different control rules, different network transmission characteristics analysis is triggered; and parallel processing or serial processing can be performed on different network transmission characteristic analysis.

Specifically, the service stream information may include the number of sent packets, or a time stamp, or cyclic redundancy check code (CRC) check, and so on.

Correspondingly, the control rule may include performance statistics, or packet rewriting detection, or connectivity detection, and so on.

Correspondingly, implementation of this step may include:
1. The service stream information includes the number of sent packets and/or a time stamp. The control rule includes performance statistics.
   The implementation of this step may include: when it is determined, according to the control rule, that the type of the transmission characteristic analysis is performance statistics, counting the number of locally received service packets; calculating a local packet loss rate according to the number of sent packets in the service stream information and the number of received service packets; and/or calculating, according to the time stamp in the service stream information and local time, a delay of the service stream identified by the service stream identifier.
   Definitely, in a practical application, in the performance statistics, other parameters may further be counted, and an indication may also be made according to a specific content carried in the foregoing service stream information and the control rule, which is not described herein again.
2. The service stream information includes CRC check; and the control rule includes packet rewriting detection.
   The implementation of this step may include: when it is determined, according to the control rule, that the type of the transmission characteristic analysis is packet rewriting detection, determining, according to a CRC check field in the service stream information, whether the service stream identified by the service stream identifier is rewritten.
   In a practical application, the first service network element may send service streams that have different data lengths, so that each network element determines whether a packet is rewritten.
3. The service stream information includes a time stamp, and the control rule includes connectivity detection.

The implementation of this step may include: when it is determined, according to the control rule, that the type of the transmission characteristic analysis is connectivity detection, calculating, according to the time stamp in the service stream information and local time, a delay of the service stream identified by the service stream identifier, and determining whether the delay exceeds a delay threshold; if yes, determining that the intermediate network element is disconnected from a previous hop network element; otherwise, determining that the intermediate network element is connected to the previous hop network element.

In addition, the service packet may further carry an access control list (ACL) rule, and a packet capture duration or the number of captured packets.

Correspondingly, the step and procedure in the embodiment of the present invention may further include:
After receiving the service packet, each intermediate network element and the second service network element perform packet capture procedure on the received service packet according to the packet capture duration or the number of captured packets and in the light of the ACL rule.

The ACL rule is one of technologies that can check and filter a data packet on a router. The ACL is to use a packet filtering technology to read information in a packet header of the layer 3 and the layer 4 on the router, such as a source address, a destination address, a source port, and a destination port, and filter a packet according to a predefined rule, so as to achieve an objective of access control. How to specifically perform the packet capture processing in the light of the ACL rule in this step is not described herein.

Because each foregoing analysis is performed by carrying, in a service packet, information that is required in analysis. Therefore analysis may be performed based on an existing real service stream, thereby improving the accuracy of the analysis greatly.

Step 306: Each network element transmits first preset information in a result of the network transmission characteristic analysis to another intermediate network element and service network element through the intermediate network element, and reports second preset information in the result of the network transmission characteristic analysis to the upper-layer control node (such as a network management system), so that the upper-layer control node performs global characteristic analysis (for example, the upper-layer control node can know whether a fault occurs on a link between network elements, and know information such as a delay of each link) according to the second preset information; or so that the upper-layer control node performs global characteristic analysis according to the second preset information and/or the preset information that is reported by the another intermediate network element.

The first preset information refers to information that is preset and needs to be transmitted to the first service network element and the second service network element in the result of the network transmission characteristic analysis.

The second preset information refers to information that is preset and needs to be transmitted to the upper-layer control node in the result of the network transmission characteristic analysis.

The first preset information and the second preset information may include part of or all information in the result of the network transmission characteristic analysis.

In the embodiment of the present invention, each intermediate network element, the first service network element, and the second service network element may transmit a characteristic analysis result (such as delay information, packet loss rate, connectivity information, packet capture information, and fault information) detected by themselves to another network element, so as to implement transfer of the characteristic analysis result among network elements in a system; and these network elements may also transmit preset information in their own characteristic analysis result to the upper-layer control node, so as to provide a data basis for the upper-layer control node to perform global characteristic analysis such as global characteristic analysis and fault location on the whole system, thereby implementing that information can be perceived over the whole network, so that the monitor for the whole network is smarter, and the maintainability is improved.

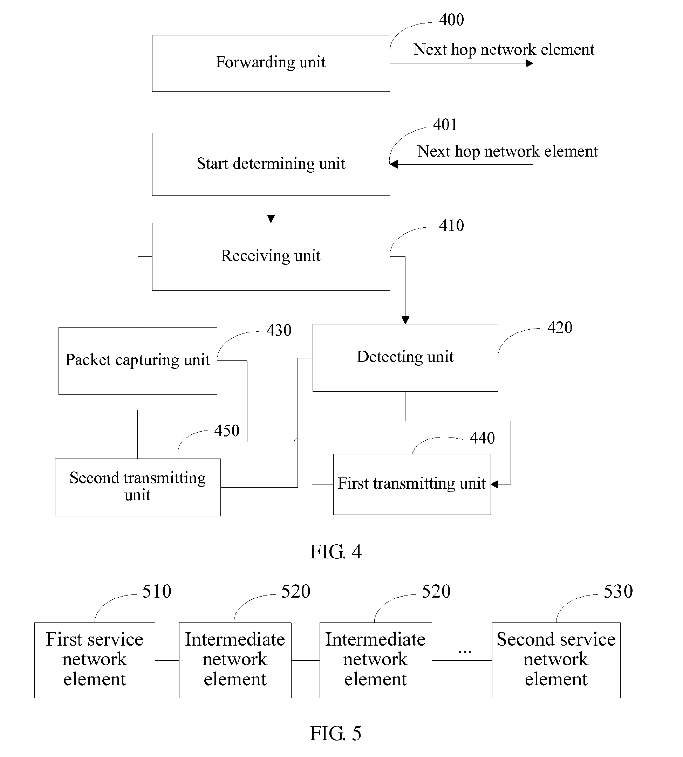

In respect to the method for analyzing a network transmission characteristic, an embodiment of the present invention further provides an apparatus and a system for analyzing a network transmission characteristic. As shown in FIG. 4, a schematic structural diagram of an apparatus for analyzing a network transmission characteristic is provided. The apparatus may be disposed in an intermediate network element, and the apparatus includes:
a receiving unit 410, configured to receive a service packet sent by a first service network element through the intermediate network element to a second service network element, where the service packet carries a service stream identifier, service stream information and a control rule, where the service stream identifier is used to identify a service stream, the service stream information is used to provide a parameter that is required during transmission characteristic analysis, and the control rule is used to determine a type of the transmission characteristic analysis; and
a detecting unit 420, configured to determine the type of the transmission characteristic analysis according to the received control rule, and analyze, according to the service stream information, the service stream identified by the service stream identifier in a network.

Preferably, the service stream information may include the number of sent packets, or a time stamp, or CRC check.

The control rule may include performance statistics, or packet rewriting detection, or connectivity detection.

Specifically, the service stream information includes the number of sent packets and/or a time stamp; and the control rule includes performance statistics. The detecting unit 420 may be specifically configured to:
when it is determined, according to the control rule, that the type of the transmission characteristic analysis is performance statistics, count the number of locally received service packets; calculate a local packet loss rate according to the number of sent packets in the service stream information and the number of received service packets; and/or calculate, according to the time stamp in the service stream information and local time, a delay of the service stream identified by the service stream identifier; and/or
the service stream information includes CRC check. The control rule includes packet rewriting detection. The detecting unit 420may be specifically configured to:
   when it is determined, according to the control rule, that the type of the transmission characteristic analysis is packet rewriting detection, determine, according to a CRC check field in the service stream information, whether the service stream identified by the service stream identifier is rewritten; and/or
the service stream information includes a time stamp. The control rule includes connectivity detection. The detecting unit 420 may be specifically configured to:
   when it is determined, according to the control rule, that the type of the transmission characteristic analysis is connectivity detection, calculate, according to the time stamp in the service stream information and local time, a delay of the service stream identified by the service stream identifier, and determine whether the delay exceeds a delay threshold; if yes, determine that the intermediate network element is disconnected from a previous hop network element; otherwise, determine that the intermediate network element is connected to the previous hop network element.

Preferably, the apparatus may further include:
a forwarding unit 400, configured to receive a monitor starting packet sent by the first service network element through the intermediate network element to the second service network element, and deliver and forward the monitor starting packet; and
a start determining unit 401, configured to determine that a response packet of the monitor starting packet is received in preset time, where the response packet is fed back by the second service network element to the first service network element through the intermediate network element.

Preferably, the service packet may further carry: an ACL rule, and a packet capture duration or the number of captured packets.

Correspondingly, the apparatus may further include:
a packet capturing unit 430, configured to perform packet capture processing on the received service packet according to the packet capture duration or the number of captured packets and in the light of the ACL rule.

Preferably, the apparatus may further include:
a first transmitting unit 440, configured to transmit preset information in a result of the network transmission characteristic analysis to the first service network element and the second service network element through the intermediate network element.

Preferably, the apparatus may further include:
a second transmitting unit 450, configured to report preset information in the result of the network transmission characteristic analysis to an upper-layer control node, so that the upper-layer control node performs global characteristic analysis according to the second preset information; or so that the upper-layer control node performs global characteristic analysis according to the second preset information and/or the preset information that is reported by another intermediate network element.

The first preset information refers to information that is preset and needs to be transmitted to the first service network element and the second service network element in the result of the network transmission characteristic analysis.

The second preset information refers to information that is preset and needs to be transmitted to the upper-layer control node in the result of the network transmission characteristic analysis.

In addition, as shown in FIG. 5, an embodiment of the present invention further provides a system for analyzing a network transmission characteristic, where the system includes:
a first service network element 510, configured to send a service packet to a second service network element through an intermediate network element;
the intermediate network element 520, configured to receive the service packet sent by the first service network element through the intermediate network element to the second service network element; where the service packet carries a service stream identifier, service stream information and a control rule; where the service stream identifier is used to identify a service stream, the service stream information is used to provide a parameter that is required during transmission characteristic analysis, and the control rule is used to determine a type of the transmission characteristic analysis; and the intermediate network element determines the type of the transmission characteristic analysis according to the received control rule, and analyzes, according to the service stream information, the service stream identified by the service stream identifier in a network; and
the second service network element 530, configured to receive, through the intermediate network element, the service packet sent by the first service network element.

Each foregoing network element may include relevant and corresponding units in the foregoing apparatus embodiment and execute relevant steps in the method embodiments, and can be implemented based on an existing hardware device during specific implementation, for example, software design (based on an existing hardware) is changed in an existing router, so that it has the functions mentioned in the foregoing embodiments.

In the apparatus and system for analyzing a network transmission characteristic shown in FIG. 4 to FIG. 5, a monitor packet that has a service stream identifier, service stream information, a control rule, and so on is carried in an associated manner in a service packet sent by the first service network element, and each intermediate network element and the second service network element can perform corresponding transmission characteristic analysis according to the monitor packet that is carried in the service packet, so that real and accurate transmission characteristic analysis data of each network element in a network and a network between network elements may be obtained, thereby improving the accuracy of the network transmission characteristic analysis data, providing real and reliable data for subsequent processing such as network fault determination, and improving the accuracy of network fault location.

Persons of ordinary skill in the art may understand that, a process of the method in the foregoing embodiments may be implemented by relevant hardware (for example, processors such as the CPU and the DSP) storing a program instruction. The program may be stored in a readable storage medium. When the program is run, corresponding steps in the foregoing method are executed. The storage medium may be a ROM/RAM, a magnetic disk, an optical disk, and so on.

It should be noted that the foregoing descriptions are merely exemplary embodiments of the present invention, and persons of ordinary skill in the art may also make several improvements and refinements without departing from the principle of the present invention. All such modifications and refinements shall fall within the protection scope of the present invention.

## Claims

1. A method for analyzing a network transmission characteristic, comprising:
receiving, by an intermediate network element, a service packet sent by a first service network element through the intermediate network element to a second service network element, wherein the service packet carries a service stream identifier, service stream information, and a control rule, wherein the service stream identifier is used to identify a service stream, the service stream information is used to provide a parameter that is required during transmission characteristic analysis, and the control rule is used to determine a type of the transmission characteristic analysis; and
determining, by the intermediate network element, the type of the transmission characteristic analysis according to the received control rule, and analyzing, according to the parameter that is provided by the service stream information and required during the transmission characteristic analysis, the service stream identified by the service stream identifier in a network, so as to obtain a network transmission characteristic.

2. The method according to claim 1, wherein
the service stream information comprises the number of sent packets or a time stamp;
the control rule comprises performance statistics; and
the determining, by the intermediate network element, the type of the transmission characteristic analysis according to the received control rule, and analyzing, according to the parameter that is provided by the service stream information and required during the transmission characteristic analysis, the service stream identified by the service stream identifier in the network comprises:
when it is determined, according to the control rule, that the type of the transmission characteristic analysis is performance statistics, counting the number of locally received service packets, and calculating a local packet loss rate according to the number of sent packets in the service stream information and the number of received service packets; or
calculating, according to the time stamp in the service stream information and local time, a delay of the service stream identified by the service stream identifier.

3. The method according to claim 1, wherein
the service stream information comprises cyclic redundancy check code CRC check;
the control rule comprises packet rewriting detection; and
the determining, by the intermediate network element, the type of the transmission characteristic analysis according to the received control rule, and analyzing, according to the parameter that is provided by the service stream information and required during the transmission characteristic analysis, the service stream identified by the service stream identifier in the network comprises:
when it is determined, according to the control rule, that the type of the transmission characteristic analysis is packet rewriting detection, determining, according to a CRC check field in the service stream information, whether the service stream identified by the service stream identifier is rewritten.

4. The method according to claim 1, wherein
the service stream information comprises a time stamp;
the control rule comprises connectivity detection; and
the determining, by the intermediate network element, the type of the transmission characteristic analysis according to the received control rule, and analyzing, according to the parameter that is provided by the service stream information and required during the transmission characteristic analysis, the service stream identified by the service stream identifier in the network comprises:
when it is determined, according to the control rule, that the type of the transmission characteristic analysis is connectivity detection, calculating, according to the time stamp in the service stream information and local time, a delay of the service stream identified by the service stream identifier, and determining whether the delay exceeds a delay threshold; if yes, determining that the intermediate network element is disconnected from a previous hop network element; otherwise, determining that the intermediate network element is connected to the previous hop network element.

5. The method according to claim 1, before receiving the service packet, further comprising:
receiving, by the intermediate network element, a monitor starting packet sent by the first service network element through the intermediate network element to the second service network element, and forwarding the monitor starting packet; and
when a response packet of the monitor starting packet is received in preset time, starting the transmission characteristic analysis, wherein the response packet is fed back by the second service network element to the first service network element through the intermediate network element.

6. The method according to claim 1, wherein the service packet further carries: an access control list ACL rule, and a packet capture duration or the number of captured packets; and
the method further comprises:
performing packet capture processing on the received service packet according to the packet capture duration or the number of captured packets and in the light of the ACL rule.

7. The method according to any one of claims 1 to 6, further comprising:
transmitting, through the intermediate network element, first preset information in a result of the network transmission characteristic analysis to the first service network element and the second service network element, wherein the first preset information comprises information that is preset and needs to be transmitted to the first service network element and the second service network element in the result of the network transmission characteristic analysis.

8. The method according to any one of claims 1 to 6, further comprising:
reporting second preset information in a result of the network transmission characteristic analysis to an upper-layer control node, so that the upper-layer control node performs global characteristic analysis according to the second preset information;
or
so that the upper-layer control node performs global characteristic analysis according to the second preset information and/or the preset information that is reported by another intermediate network element; wherein
the second preset information comprises information that is preset and needs to be transmitted to the upper-layer control node in the result of the network transmission characteristic analysis.

9. An apparatus for analyzing a network transmission characteristic, comprising:
a receiving unit, configured to receive a service packet sent by a first service network element through the intermediate network element to a second service network element, wherein the service packet carries a service stream identifier, service stream information, and a control rule, wherein the service stream identifier is used to identify a service stream, the service stream information is used to provide a parameter that is required during transmission characteristic analysis, and the control rule is used to determine a type of the transmission characteristic analysis; and
a detecting unit, configured to determine the type of the transmission characteristic analysis according to the received control rule, and analyze, according to the parameter that is provided by the service stream information and required during the transmission characteristic analysis, the service stream identified by the service stream identifier in a network, so as to obtain a network transmission characteristic.

10. The apparatus according to claim 9, wherein
the service stream information comprises the number of sent packets or a time stamp;
the control rule comprises performance statistics; and
the detecting unit is specifically configured to:
when it is determined, according to the control rule, that the type of the transmission characteristic analysis is performance statistics, count the number of locally received service packets; and calculate a local packet loss rate according to the number of sent packets in the service stream information and the number of received service packets; or calculate, according to the time stamp in the service stream information and local time, a delay of the service stream identified by the service stream identifier.

11. The apparatus according to claim 9, wherein
the service stream information comprises cyclic redundancy check code CRC check;
the control rule comprises packet rewriting detection; and
the detecting unit is specifically configured to:
when it is determined, according to the control rule, that the type of the transmission characteristic analysis is packet rewriting detection, determine, according to a CRC check field in the service stream information, whether the service stream identified by the service stream identifier is rewritten.

12. The apparatus according to claim 9, wherein
the service stream information comprises a time stamp;
the control rule comprises connectivity detection; and
the detecting unit is specifically configured to:
when it is determined, according to the control rule, that the type of the transmission characteristic analysis is connectivity detection, calculate, according to the time stamp in the service stream information and local time, a delay of the service stream identified by the service stream identifier, and determine whether the delay exceeds a delay threshold; if yes, determine that the intermediate network element is disconnected from a previous hop network element; otherwise, determine that the intermediate network element is connected to the previous hop network element.

13. The apparatus according to claim 9, further comprising:
a forwarding unit, configured to receive a monitor starting packet sent by the first service network element through the intermediate network element to the second service network element, and deliver and forward the monitor starting packet; and
a start determining unit, configured to: when a response packet of the monitor starting packet is received in preset time, start the transmission characteristic analysis, wherein the response packet is fed back by the second service network element to the first service network element through the intermediate network element.

14. The apparatus according to claim 9, wherein the service packet further carries: an access control list ACL rule, and a packet capture duration or the number of captured packets; and
the apparatus further comprises:
a packet capturing unit, configured to perform packet capture processing on the received service packet according to the packet capture duration or the number of captured packets and in the light of the ACL rule.

15. The apparatus according to any one of claims 9 to 14, further comprising:
a first transmitting unit, configured to transmit, through the intermediate network element, first preset information in a result of the network transmission characteristic analysis to the first service network element and the second service network element, wherein the first preset information refers to information that is preset and needs to be transmitted to the first service network element and the second service network element in the result of the network transmission characteristic analysis.

16. The apparatus according to any one of claims 9 to 14, further comprising:
a second transmitting unit, configured to report preset information in a result of the network transmission characteristic analysis to an upper-layer control node, so that the upper-layer control node performs global characteristic analysis according to the second preset information; or so that the upper-layer control node performs global characteristic analysis according to the second preset information and/or the preset information that is reported by another intermediate network element, wherein the second preset information refers to information that is preset and needs to be transmitted to the upper-layer control node in the result of the network transmission characteristic analysis.

17. A network system, comprising:
a first service network element, configured to send a service packet to a second service network element through an intermediate network element;
the intermediate network element, configured to receive the service packet sent by the first service network element through the intermediate network element to the second service network element, wherein the service packet carries a service stream identifier, service stream information, and a control rule, wherein the service stream identifier is used to identify a service stream, the service stream information is used to provide a parameter that is required during transmission characteristic analysis, and the control rule is used to determine a type of the transmission characteristic analysis; determine the type of the transmission characteristic analysis according to the received control rule, and analyze, according to the parameter that is provided by the service stream information and required during the transmission characteristic analysis, the service stream identified by the service stream identifier in a network, so as to obtain a network transmission characteristic; and
the second service network element, configured to receive, through the intermediate network element, the service packet sent by the first service network element.

18. The system according to claim 17, wherein
the service stream information comprises the number of sent packets and/or a time stamp;
the control rule comprises performance statistics; and
the intermediate network element is specifically configured to:
when it is determined, according to the control rule, that the type of the transmission characteristic analysis is performance statistics, count the number of locally received service packets; and calculate a local packet loss rate according to the number of sent packets in the service stream information and the number of received service packets; or
calculate, according to the time stamp in the service stream information and local time, a delay of the service stream identified by the service stream identifier.

19. The system according to claim 17, wherein
the service stream information comprises CRC check;
the control rule comprises packet rewriting detection; and
the intermediate network element is specifically configured to:
when it is determined, according to the control rule, that the type of the transmission characteristic analysis is packet rewriting detection, determine, according to a CRC check field in the service stream information, whether the service stream identified by the service stream identifier is rewritten.

20. The system according to claim 17, wherein
the service stream information comprises a time stamp;
the control rule comprises connectivity detection; and
the intermediate network element is specifically configured to:
when it is determined, according to the control rule, that the type of the transmission characteristic analysis is connectivity detection, calculate, according to the time stamp in the service stream information and local time, a delay of the service stream identified by the service stream identifier, and determine whether the delay exceeds a delay threshold; if yes, determine that the intermediate network element is disconnected from a previous hop network element; otherwise, determine that the intermediate network element is connected to the previous hop network element.
